# EUROPÄISCHE PATENTANMELDUNG

(11) **EP 0 939 304 A1**
(43) Veröffentlichungstag der Anmeldung: **01.09.1999**
(21) Anmeldenummer: 98121621.1
(22) Anmeldetag: 12.11.1998
(51) Int. Cl.: G01F 1/692

(54) **Luftmassensensor**

(30) Priorität: 27.02.1998 DE 19808247
(71) Anmelder: Pierburg Aktiengesellschaft, 41460 Neuss (DE)
(72) Erfinder: Liedtke, Günter, 45239 Essen (DE); Wienecke, Thomas, 41352 Korschenbroich (DE)

(57) **Zusammenfassung**

Die Erfindung betrifft einen Luftmassensensor zur Bestimmung der Masse eines strömenden Mediums.

Bekannte Luftmassensensoren weisen in Brückenschaltung veränderliche Meßwiderstände (R1, R3) sowie passive Widerstände (R2, R4, R5) auf, wobei die passiven Widerstände (R2, R4, R5) in einem von den veränderlichen Meßwiderständen getrennten Elektronikteil angeordnet sind, wodurch ein Abgleich der Brückenschaltung erst nach Zusammenschluß mit dem Elektronikteil erfolgen kann. Dadurch weist jeder Luftmassensensor eigene, individuelle Ausgangswerte im notwendigen Toleranzbereich auf.

Demgegenüber sind bei der vorliegenden Lösung die passiven Widerstände (R2, R4, R5) auf den selben Träger (20) auf- bzw. untergebracht, auf dem sich auch die veränderlichen Meßwiderstände (R1, R3) befinden. Dadurch wird ein Luftmassensensormodul (1) geschaffen, das in sich abgeglichen wird und an seinen Schnittstellen (3, 4, 5, 6) je Modul (1) gleiche, normierte Ausgangswerte für ein nachfolgendes Elektronikteil (2) mit Auswerteeinheit (15) und Regeleinheit (10) auf einem Elektronikhybrid (2) aufweist.

## Beschreibung

Die Erfindung betrifft einen Luftmassensensor nach dem Oberbegriff des Patentanspruchs 1.

Luftmassensensoren bestehen aus einem Temperaturfühlerwiderstand und einem Heizwiderstand, die beide in einem Meßkreis mit passiven Widerständen zu einer Brückenschaltung verschaltet sind und Bestandteil eines Elektronikteils sind.

Aus der DE 41 42 853 A1 ist ein thermischer Durchflußsensor bekannt, bei dem ein Fluidtemperatursensor sowie ein thermischer Widerstand in einem Strömungskanal eingebracht sind. Die passiven Widerstände der Widerstandsserienschaltung für eine vollständige Brückenschaltung sind außerhalb des Strömungskanals und damit separat auf einem weiteren Elektronikträger angeordnet.

In der DE 43 08 227 A1, die ein Meßelement zur Bestimmung der Masse eines strömenden Mediums offenbart, wird angeregt, die passiven Widerstände der Brückenschaltung in möglichst engem Wärmekontakt anzuordnen, um eine enge Tolerierung der Temperaturkoeffizienten dieser Widerstände zu vermeiden. Dazu befinden sich Kontaktflächen auf einem Substrat, auf welchem ein temperaturabhängiger Widerstand sowie ein Heizwiderstand und ein temperaturabhängiger Kompensationswiderstand aufgebracht sind. Dieses Substrat ragt in einen Strömungskanal hinein, wobei die passiven Widerstände für eine vollständige Brückenschaltung ebenfalls in einer Elektronikeinheit untergebracht sind.

Zum Ausgleich von Exemplarströmungen und um die Empfindlichkeit und Temperaturkompensation der Brückenschaltung einzuhalten, werden die passiven Widerstände abgeglichen. Bei einer analogen Weiterverarbeitung der Brückenausgangsspannung werden weitere Widerstände auf eine vorgegebene Ausgangskennlinie abgeglichen. Der gesamte Abgleich erfolgt durch beispielsweise Lasertrimmen an einem vollständigen kompletten Luftmassensensor.

Aufgabe der Erfindung ist es, einen Luftmassensensor anzugeben, der in einfacher Form abgeglichen werden kann.

Gelöst wird die Aufgabe durch die Merkmale des Patentanspruchs 1.

Der Erfindung liegt hierbei die Idee zugrunde, ein in sich geschlossenes Luftmassensensormodul zu schaffen, bei dem auf einem Sensorhybrid neben einem temperaturabhängigen Widerstand und einem Heizwiderstand auch die passiven Widerstände aufgebracht sind. Dadurch wird eine Meß- bzw. Sensoreinheit geschaffen, deren Brückenschaltung in sich abgestimmt ist und nur noch mit einer Auswerte- und einer Regelelektronik anschlossen und abgestimmt werden muß. Der so geschaffene Sensor ist als ein fertig geeichter Sensor für eine Massenproduktion fertigbar und besitzt an seinen Schnittstellen normierte Ausgangswerte.

Vorteilhafte Ausführungen sind in den Unteransprüchen enthalten. Die Schaffung eines Sensorsmoduls ist durch die Anordnung von mindestens einem Heiz- und mindestens einem Temperatursensor auf je einer Membran auf einem Sensorchip möglich. Die zu den dabei geschaffenen Brückenzweigen notwendigen Widerstände können gleichfalls im Sensormodul integriert werden.

Die Erfindung soll anhand eines Ausführungsbeispiels mit Zeichnung näher erläutert werden. Es zeigen:
- Figur 1: eine schaltungstechnische Anordnung,
- Figur 2: eine schematische Draufsichtdarstellung eines Luftmassensensormoduls.

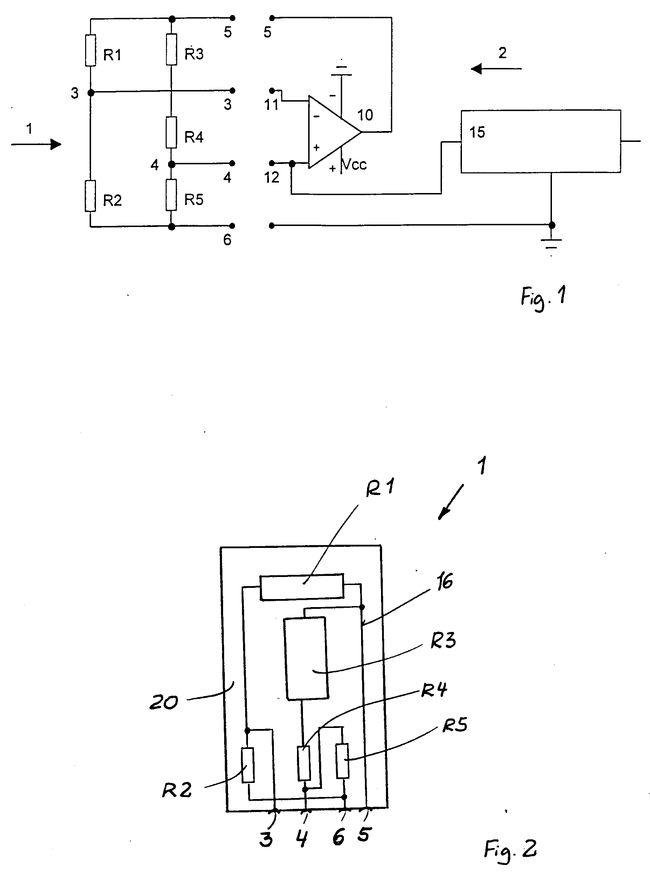

In Figur 1 ist eine Brückenschaltung eines Luftmassensensormoduls 1 schaltungstechnisch dargestellt. Ein Temperatursensorwiderstand R1 liegt dabei mit einem passiven Widerstand R2 in einem Brückenzweig, ein Heizwiderstand R3 mit weiteren passiven Widerständen R4, R5 in einem weiteren. Mit 2 ist ein Elektronikhybrid gekennzeichnet, auf dem sich ein Operationsverstärker 10 sowie eine digitale Signalverarbeitungseinheit 15 befinden. Der Operationsverstärker 10 ist mit seinem positiven Eingang 11 sowie dem negativen Eingang 12 an den Brückenabgriffen 3 und 4 angeschlossen. Die Brückenabgriffe 3 und 4 bilden die Brückendiagonale und gehören zum Brückennullzweig. Der Brückenabgriff 3 befindet sich dabei zwischen dem Temperatursensorwiderstand R1 und dem passiven Widerstand R2. Der Brückenabgriff 4 befindet sich zwischen den passiven Widerständen R4 und R5. Der Ausgang des Operationsverstärkers 10 ist auf dem Knotenpunkt 5 der Brückenschaltung zwischen dem Temperatursensorwiderstand R1 und dem Heizwiderstand R3 zurückgeführt, um in bekannter Art und Weise eine Brückenregelung zu realisieren. Der Brückenabgriff 4 ist zusätzlich mit der digitalen Signalverarbeitungseinheit 15 verbunden. In der Signalverarbeitungseinheit 15 erfolgt bei Veränderung der Wärmeabgabe des Heizwiderstandes R3 und Nachregeln der Elektronik die Ermittlung und Auswertung des durchfließenden Luftstromes. Die digitale Signaleinheit 15 kann dabei Bestandteil eines nicht näher dargestellten Mikroprozessors sein. In bekannter Art und Weise können in der Signalverarbeitungseinheit 15 Kenndatenblätter und dergleichen als Vergleichswerte hinterlegt sein.

Figur 2 zeigt eine mögliche Anordnung der Brückenschaltung, bestehend aus dem Temperatursensorwiderstand R1, dem Heizwiderstand R3 sowie den passiven Widerständen R2, R4 und R5 auf einem gemeinsamen Sensormodul 1. Dieses Sensormodul 1 besteht aus Silicium, auf dem die metallischen Widerstände R1 und R3 aufgebracht sind.

Dem in Hybridtechnologie aus Keramik gefertigten Sensormodul 1 werden zusätzlich Leiterbahnen 16, beispielsweise durch Drucken aufgetragen. Ebenfalls gedruckt werden die passiven Widerstände R2, R4, R5 auf das Sensormodul 1. Auf diesen Widerständen R2, R4, R5 erfolgt durch Trimmung das Einstellen der notwendigen Toleranzen des Luftmassensensormoduls 1. Nach Prüfung der Umgebungsresistenz erfolgt das Anschließen an den Elektronikhybrid 2 über die aus dem Luftmassensensormodul 1 herausgeführten Schnittstellen 3, 4, 5 und 6, an die die Auswerte- und die Regeleinheiten angeschlossen werden.

Der Vorteil dieser Erfindung liegt darin, daß das Abgleichen bzw. Trimmen der abzugleichenden Widerstände R2, R4 und R5 vorab beim Herstellen des Luftmassensensormoduls 1 erfolgen kann. Dadurch sind normierte Ausgangsgrößen sowie bessere Einsatzmöglichkeiten des Luftmassensensormoduls 1 gegeben. Durch die normierten Ausgangsgrößen sind diese Luftmassensensormodule 1 bei Montage und Reparaturen ohne Probleme austauschbar bzw. gegeneinander ersetzbar. Durch die Verwendung einer digitalen Signalverarbeitungseinheit 15 entfällt zudem der Abgleich von weiteren Widerständen auf dem Elektronikhybrid 2.

Das Luftmassensensormodul 1 und der Elektronikhybrid 2 werden danach vorzugsweise als ein kompletter Luftmassensensor (nicht dargestellt) zusammen in einem beide Teile fassenden Gehäuse untergebracht. Dazu wird das Sensormodul 1 vorzugsweise durch eine Labyrinthdichtung zum Elektronikteil auf dem Elektronikhybrid 2 abgedichtet.

## Patentansprüche

1. Luftmassensensor zur Bestimmung der Masse eines strömenden Mediums, inbesondere der Ansaugluft von Brennkraftmaschinen, mit einem Substrat, auf dem ein Temperatursensorwiderstand und ein Heizwiderstand aufgebracht sind und dem eine Regel- und eine Auswerteinheit nachgeschaltet ist, **dadurch gekennzeichnet,** daß dieser als Luftmassensensormodul (1) passive Widerstände (R2, R4, R5) auf dem Substrat (20) aufweist, die mit dem Temperatursensorwiderstand (R1) und dem Heizwiderstand (R3) durch aufgebrachte Leiterbahnen (16) zu einer Brücke verschaltet sind.

2. Luftmassensensor nach Anspruch 1, **dadurch gekennzeichnet,** daß die Regeleinheit ein Operationsverstärker (10) ist.

3. Luftmassensensor nach Anspruch 1, **dadurch gekennzeichnet,** daß die Auswerteinheit eine digitale Signalverarbeitungseinheit (15) ist.

4. Luftmassensensor nach einem der vorgenannten Ansprüche, **dadurch gekennzeichnet,** daß der Operationsverstärker (10) und die digitale Signalverarbeitungseinheit (15) auf einem separaten Elektronikhybrid (2) aufgebracht sind.
